## Europäisches Patentamt

## European Patent Office

## Office européen des brevets

(11) Publication number: **0 138 510**
**B1**

(12) **EUROPEAN PATENT SPECIFICATION**

(45) Date of publication of patent specification: **11.10.89**

(21) Application number: **84306744.8**

(22) Date of filing: **03.10.84**

(51) Int. Cl.⁴: **B 60 J 3/00**

㊾ Visor.

(30) Priority: **03.10.83 US 538569**

(43) Date of publication of application:
**24.04.85 Bulletin 85/17**

(45) Publication of the grant of the patent:
**11.10.89 Bulletin 89/41**

(84) Designated Contracting States:
**DE FR GB IT**

(56) References cited:
**EP-A-0 023 536**
**DE-A-1 555 723**
**DE-A-2 730 926**
**FR-A-2 453 042**
**US-A-3 008 757**
**US-A-3 375 364**
**US-A-4 227 241**

(73) Proprietor: **PRINCE CORPORATION**
**Windcrest Drive**
**Holland Michigan 49423 (US)**

(72) Inventor: **Marcus, Konrad Hugh**
**1162 Waukazoo Drive**
**Holland Michigan 49423 (US)**
Inventor: **Flowerday, Carl Wayne**
**1219 Heather Drive**
**Holland Michigan 49423 (US)**
Inventor: **Fleming, Dennis Joseph**
**617 State Street**
**Holland Michigan 49423 (US)**

(74) Representative: **Robinson, Anthony John**
**Metcalf et al**
**Kilburn & Strode 30 John Street**
**London, WC1N 2DD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a visor more particularly a visor lighting system especially one for use in connection with a visor or visor-like panel for a vehicle.

Vehicle visors for use in automobiles with or without lighting means have become standard equipment on, or popular accessories for, many automobiles.

US-A-3375364 describes a visor assembly comprising a slide-out mirror with a light attached to the lower edge of the mirror which remains outside the visor body. The mirror may be raised or lowered using the light as a handle. The direction of the light from the light source may be varied to a small degree by rotation of the source within its casing.

A known visor is shown in US-A-3008757. This visor has those features set out in the preamble to Claim 1. A difficulty with this visor is that the mounting of the panel to the visor body is exposed outside the visor body. This is both unattractive and also likely to lead to accidental damage.

According to the present invention, a visor is characterised by those features set out in the characterising portion of Claim 1. Placing the mounting means within the visor body results in a robust and visually-pleasing visor, which is less susceptible to damage than the known visor mentioned above.

In addition, the fact that the panel pivots adjacent its upper rather than adjacent its lower edge means that the visor can easily be angled by the user to a convenient use position, with no gap between the visor body and the panel (which would let glare reach the eyes of the driver). To adjust the panel of the prior art into such an angled position is considerably more difficult, since the panel must first be pulled fully out, then angled, then pushed back in to close the resultant gap.

The invention may be put into practice in various ways but one visor and an alternative will now be described by way of example with reference to the accompanying drawings, in which:

Figure 1 is a perspective view of a visor;

Figure 2 is a perspective view of the structure shown in Figure 1 with a lighted mirror panel shown in an extended position;

Figure 3 is a fragmentary, left-side elevational view of the structure shown in Figure 2 shown in a first operational position in a vehicle;

Figure 4 is a fragmentary, left-side elevational view of the structure shown in Figure 2 shown in a second operational position in a vehicle;

Figure 5 is a fragmentary, left-side elevational view of the structure shown in Figure 2 shown in a third operational position in a vehicle;

Figure 6 is an enlarged, front elevational view of the mirror panel shown in Figures 1 and 2;

Figure 7 is an enlarged, cross-sectional view of the structure shown in Figure 6 taken along section line VII-VII of Figure 6;

Figure 8 is a fragmentary, enlarged, cross-sectional view of a portion of the structure shown in Figure 6 taken along section line VIII-VIII of Figure 6.

Figure 9 is a fragmentary, exploded view of the mirror panel and the mounting mechanism for mounting the panel to a visor body;

Figure 9A is an enlarged, fragmentary, top plan view of one of the bulb sockets shown in Figures 9 and 10 shown with a bulb inserted therein;

Figure 10 is a perspective, assembled view of a portion of the structure shown in Figure 9 showing the visor core in phantom form;

Figure 11 is an enlarged, cross-sectional view of a portion of the structure shown in Figure 6 taken along section line XI-XI of Figure 6;

Figure 12 is a perspective view of the inside of the latch release door shown in Figures 11 and 13 taken in a direction indicated by line XII-XII of Figure 13;

Figure 13 is a fragmentary, exploded view of the latch mechanism shown partly in Figures 11 and 12;

Figure 14 is a front elevational view of an alternative embodiment of the electrical contacts; and

Figure 15 is an enlarged, cross-sectional view of a portion of Figure 14 taken along section line XV-XV of Figure 18.

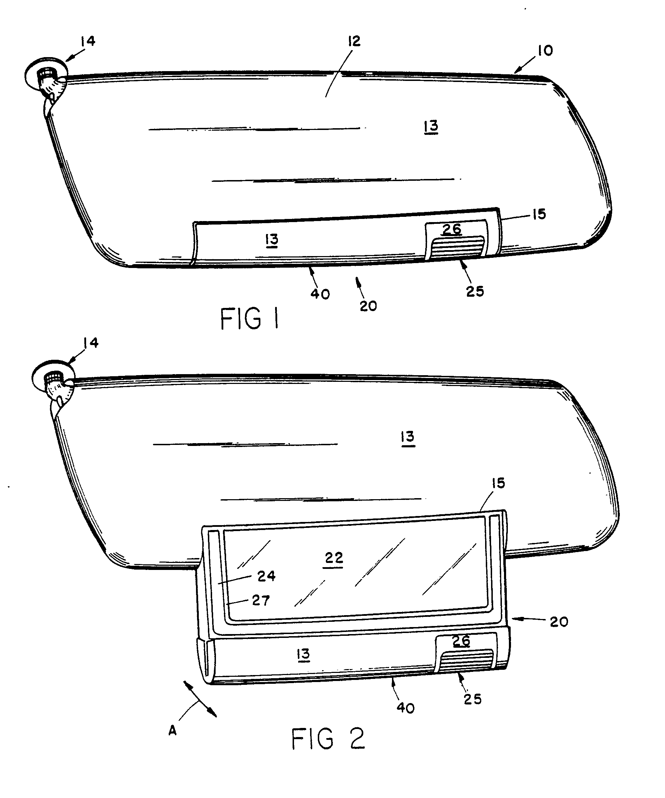

Referring initially to Figures 1 to 5, there is shown an embodiment of the invention comprising a visor assembly 10 which includes a visor body 12 having an internal moulded polypropylene core 17 (Figure 10) covered by a suitable upholstery material 13 to provide a finished appearance to the visor which matches the upholstery of the vehicle interior. An elbow bracket assembly 14 for mounting the visor to a vehicle extends into the core along the upper edge of the visor. The visor core includes a slot 15 along the lower edge of the visor body so formed for receiving an illuminated mirror assembly 20. The slot 15 which provides recessed mounting of the lower edge of the assembly 20 also extends inwardly and upwardly through the core to provide a recess receiving the assembly 20 when in a stored position, as illustrated in Figure 1.

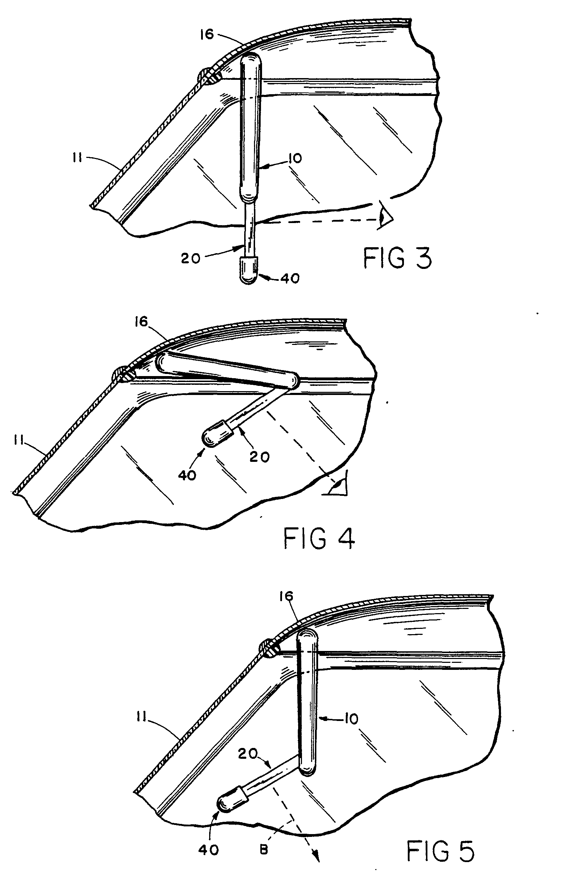

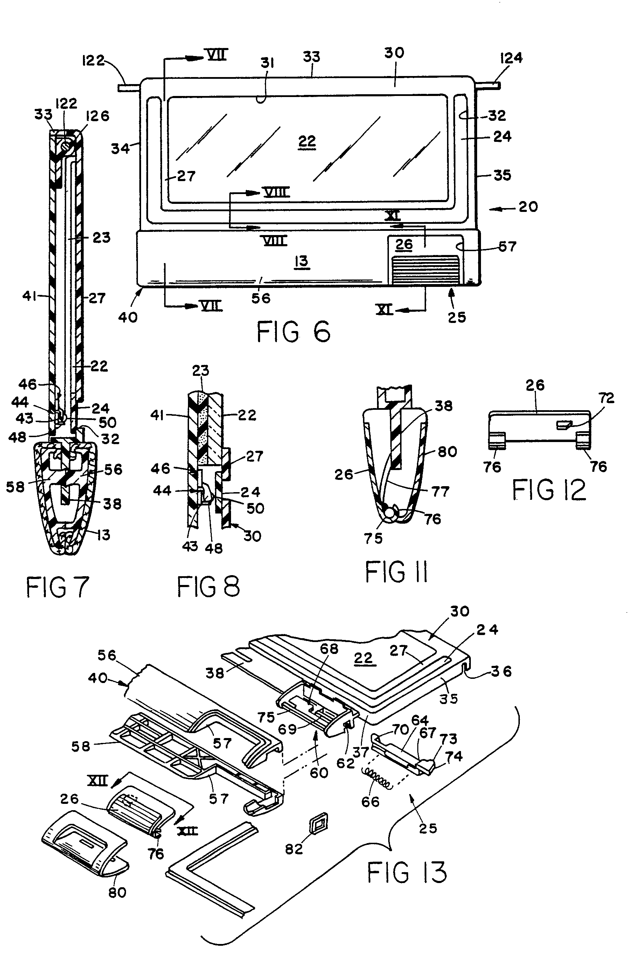

The assembly 20 which is a generally rectangular, planar, panel-like structure will be described in greater detail below. Briefly, the assembly includes a mirror 22 mounted on one side which is partly circumscribed on the left side, lower edge and right side by a generally horizontally elongated, U-shaped band of light radiating means which includes a translucent panel 24 behind which there is provided a plurality of light sources for projecting light outwardly and in front of the mirror 22. A latch assembly 25 with an actuating door 26 selectively holds the panel mirror assembly 20 within the visor body, and upon pressing the door 26 inwardly, the panel can be extended from the visor body to a lower use position, as shown in Figures 2 to 5. The panel 20 also pivots fore and aft of the visor body in a direction orthogonal to the plane of the visor body, as shown by arrow A in Figure 2 and as shown in Figures 4 and 5. Thus, the illuminated mirror panel 20 retracts into the visor body for storage, as illustrated in Figure 1, and extends from the visor body in use, as illustrated in Figures 2 to 5, and can be pivotally adjustable with respect to the visor body to a variety of operational positions.

In Figures 2 and 3, the visor 10 is shown in a lowered, generally vertically extending position with the panel 20 extending downwardly such that the upper portion of the mirror 22 will be approximately at eye level with the U-shaped lighting means projecting light outwardly in a manner to frame the face of the user with light for use of the vanity mirror under low ambient light conditions. Figure 4 shows the use of the lighted mirror panel 20 with the visor 10 being in a raised or stored position generally adjacent the roof and headliner 16 of the vehicle. In this position, the panel 20 is pulled from the visor body and pivoted downwardly to a use position, as shown. Naturally, the user must look upwardly for use of the visor in this position, however, again the pivoted adjustability of the panel 20 as well as the visor body permits the visor to be used without lowering and in a manner such that the U-shaped light provides illumination for use of the mirror as a vanity mirror.

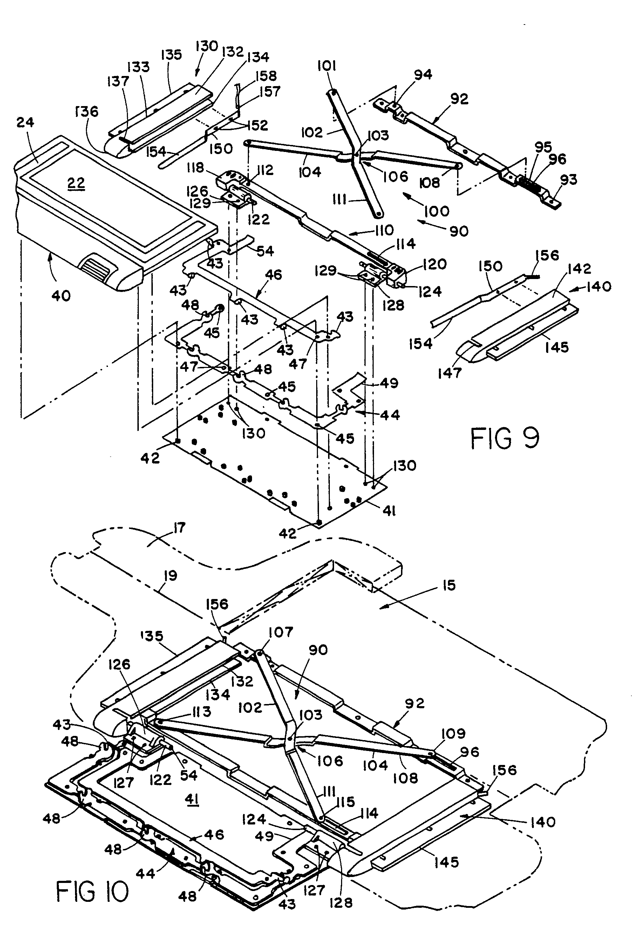

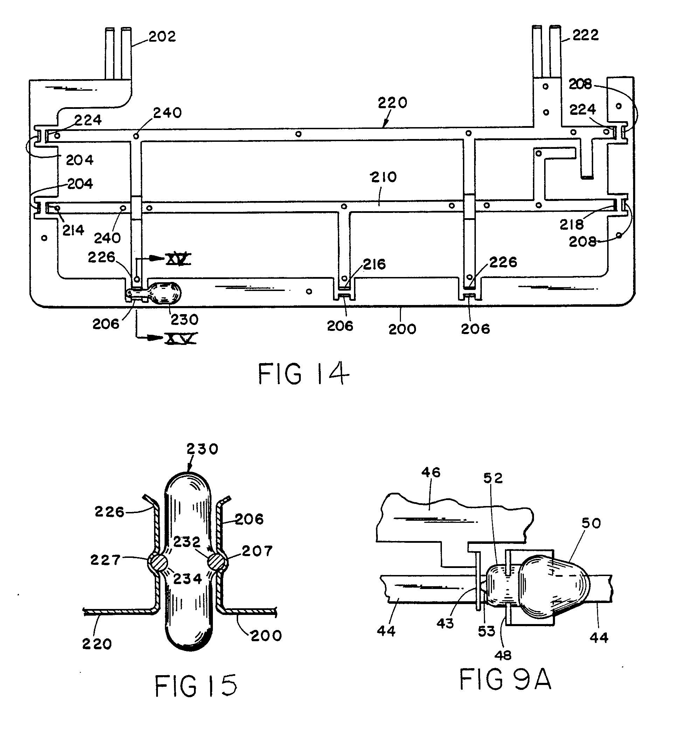

Figure 5 shows the use of the visor assembly 10 as a map reading light in which case the visor body is lowered to a generally vertically extending position with the illuminated panel 20 pivoted forwardly toward the windshield 11 of the vehicle. In this position, light from the U-shaped lighting means is projected downwardly and rearwardly, as indicated by arrow B, toward the lap of the user to provide illumination for reading maps or generally providing illumination in the lap area of the occupant in front of the visor. The assembly 20 is slidably mounted within the visor core 17 (Figure 10) by a pivoted slide assembly 90, shown in Figures 9 and 10. The illuminated mirror panel assembly 20 is best seen in Figures 6, 7, 9 and 13 and is now described in detail.

The assembly 20 includes a front panel 30 having a large rectangular aperture 31 for exposing the reflective surface of the mirror 22, secured to the rear surface of the panel 30, by conventional means such as bonding adhesives around the periphery of the mirror 22 or by integrally moulded brackets into which the mirror is fitted. As best seen in Figure 8, the mirror 22 is backed by a foam layer 23. The face of the panel 30 also includes an elongated, U-shaped slot 32, extending in spaced relationship around only three sides of the mirror 22. The slot 32 thus extends from the top left edge of the aperture 31 (as viewed in Figure 6) down along the left edge and continuously along the bottom and upwardly to the top edge of the right side to define a U-shaped slot having an elongated base leg positioned below the mirror 22. Positioned behind the slot 32 and secured by conventional means, such as bonding adhesives or integrally moulded brackets, is a light transmissive panel 24.

The panel 24 is preferably a light translucent material such as milky-white coloured polycarbonate or clear material having an interior surface which is either frosted or pebble grained to facilitate the dispersion of light throughout the panel 24 from the point light sources, described below, which are positioned behind the panel 24 at a distance of up to 1.524 mm (0.060 inches). The panel 24 has a light transmissivity of from 50% to 90% and a thickness of about 1.52 mm (0.060 inches). Preferably, the width of the exposed portion of the U-shaped light source defined by the panel 24 is about 9.52 mm (3/8 inches), and the width of boarder 27 of the panel 30 between the panel 24 and the mirror 22 is about 4.76 mm (3/16 inches).

The panel 30 includes a rearwardly extending top wall 33, left and right sidewalls 34 and 35, each of which includes a slot 36 near the top thereof, permitting pivot rods 122 and 124 to extend outwardly from the mirror assembly. The front panel 30 also includes a lower wall 37 (Figure 13) which includes a blade 38 of material extending outwardly therefrom to provide means for attaching a handle assembly 40 thereto. The right edge of the blade 38 integrally includes a latch socket 60, described in greater detail below. The integrally moulded front panel 30, preferably made of polycarbonate, thus defines a housing for enclosing not only the mirror 22 and light transmissive panel 24, but also the light source comprising the electrical conductors and light bulbs positioned behind the panel 24.

Covering the rear of the housing defined by the front panel 30 is a rear closure panel 41 having a plurality of upwardly extending posts 42 for securing thereto in spaced relationship and, a pair of flat stamped electrical conductors 44 and 46 (Figures 9 and 10). The conductor 44 is generally U-shaped and made of a strip of conductive material and includes a plurality of apertures 45 which fit over and are secured to the posts 42 to position the conductor 44 on the closure panel or cover 41. Extending along the U-shaped conductor 44 are, in the embodiment exemplified, five integrally formed, upwardly extending U-shaped clips 48, with one clip being formed on each of the side legs of the U-shaped conductor, and three, equally spaced clips 48 extending along the bottom leg of the U-shaped conductor. At the upper right corner of the conductor 44, there is provided a leaf slip-ring-type contact 49 for making electrical contact with the electrically conductive pivot rod 124 associated with the slide assembly 90.

The electrical conductor 46 also includes a plurality of apertures 47 for mounting to the posts 42 on the rear closure panel 41 and five upwardly extending, off-set, L-shaped electrical contacts 43 (Figure 9A) for engaging the rear terminal of conventional bayonet bulbs 50 fitted within U-shaped clips 48. When assembled, the insulative rear closure panel 41 conveniently made of a polycarbonate material supports, as best seen in Figure 10, the conductors 44 and 46 in spaced relationship, and the posts 42 are heat staked to secure the conductors in place. The corresponding aligned clips 48 and contacts 43 of the electrical contacts define an electrical socket for each of the five bayonet light bulbs employed. Thus, as best seen in Figure 9A, which illustrates one of the sockets, a conventional bayonet-type light bulb 50, such as a type 336, having a cylindrical portion 52, will snap-fit within the clip or socket 48 which securely, mechanically holds the bulb in position. The end contact 53 of the bulb 50 engages the upwardly extending contact 43 of the conductor 46 which includes a slip-ring contact 54 engaging the other electrically conductive pivot rod 122, as best seen in Figure 10, such that electrical power can be simultaneously applied to each of the five bulbs mounted to the electrical contact assembly. Before describing the mounting of the mirror assembly 20 to the slide assembly 90, a description of the handle assembly 40 and latch assembly 25 is now provided with initial reference to Figure 13.

The handle assembly 40 includes an upper trim piece 56 and a lower trim piece 58 each integrally moulded of a suitable polymeric material such as polycarbonate and each including a notch 57. The trim pieces 56 and 58 are snap-fitted to overlie and sandwich the blade 38 and the latch socket 60 therebetween, as best seen in Figure 7. The upholstery fabric 13 is also extended over the handle assembly 40 to conform the handle's appearance to that of the visor body.

The latch assembly 25 includes the latch socket assembly 60 integrally formed within the front panel 30 and which includes an H-shaped recess 62 extending inwardly from the right edge thereof for receiving a similarly configured latch pin 64, as best seen in Figure 13. The latch pin 64 thus slides in and out of the latch socket assembly 60 along the recess 62 and is urged in an outward direction by a compression spring 66 engaging a wall 67 of the latch pin 64 at one edge and a wall 68 at the end of a spring receiving recess 69 of the latch socket 60 at its other end once the pin has been positioned within the recess 62. The latch pin 64 includes an inclined camming surface 70 which cooperates with an inclined cam surface 72 of the door 26, as described below, to urge the latch pin 64 in an inward, retracted position within the latch socket 60 permitting sliding of the illuminated mirror assembly 20 outwardly from the visor body. The right side bracket 140 (Figure 9) of the slide assembly includes a rectangular aperture formed therein and aligned with the latch pin 64 when the mirror assembly 20 is in a retracted position, as shown in Figure 1, for receiving an end 74 of the latch pin 64 for holding the slide in a retracted position within the visor body.

The door 26 is snap-fit to a circular pin 75 of the latch socket 60 by means of semicircular, polymeric sockets 76 at opposite edges of the door. A leaf spring 77 (Figure 11) urges door 26 in a closed, flush position with a bezel member 80 which snap-fits within the notch 57 formed in the trim pieces 56 and 58.

The right edges of the trim pieces 56 and 58 include rectangular slots, as seen in Figure 13, permitting the latch pin 64 to move freely with respect to these members, and a decorative bezel 82 covers the end of the handle means and is attached thereto in a conventional manner as is bezel 80.

The inclined cam surface is positioned on the inner surface of the door 26, as best seen in Figure 12, such that as the door 26 is pushed inwardly against the leaf spring 77, the camming surface 72 engages the camming surface 70 to retract the latch pin 64 within the latch socket 60 thereby pulling the end 74 from the slot in the slide assembly, allowing the illuminated mirror assembly 20 to be extended from the visor body. The upper edge 73 of the end 74 of the latch pin is curved to permit the retraction of the assembly 20 into the visor body while urging the pin 64 inwardly until it aligns with the locking position to hold the mirror assembly 20 in a retracted, stored position within the visor body. Having described the handle assembly from the visor body, a description of the slide mechanism securing the illuminated mirror assembly within the visor core is described in connection with Figures 9 and 10.

The slide assembly 90 for mounting the mirror assembly 20 within the core of the visor 10 includes an anchor bracket 92 which is secured to the core 17 by suitable fastening means such as heat stake posts integrally formed with the core and secured within apertures 93 formed on bracket 92. The bracket includes at least two upwardly extending lands including a first land 94 for pivotally receiving one leg 102 of an X-shaped bracket 100 having a second leg 104 pivotally coupled to the leg 102 at their cross-over points by means of a pivot pin 103. End 101 of the leg 102 is pivotally coupled to the land 94 by means of a pivot pin such as a loosely fitted rivet 107 (Figure 10). The bracket 92 also includes an elongated land 95 at an end opposite the land 94 which includes a slot 96 formed therein for pivotally and slidably receiving an end 108 of the leg 104 which is pivotally and slidably coupled to the slot 96 by means of a pivot pin 109 (Figure 10) which extends through an aperture in the end of the leg 104 into the slot 96 and permits the end 108 of the leg 104 to pivot with respect to the bracket 92 as well as slide along the slot 96. In some embodiments of the invention, the mounting bracket 92 may be an integrally formed portion of the core 17 or be a stamped metal member, as illustrated in the exemplified embodiment.

The opposite ends of the legs 102 and 104 of the X bracket 100 are pivotally and slidably, respectively, mounted to a movable bracket 110 which includes an aperture 112 near one end for pivotally receiving the end of the leg 103 opposite the end 108. A pivot pin 113 pivotally couples this end of the leg 104 to the aperture 112 of the movable bracket 110. The end of the leg 102 opposite the aperture 112 is pivotally and slidably fitted within the movable bracket 110 in a slot 114 formed near the right end of the bracket by means of a pivot pin 115 such that this end of the leg 102 can pivot and slide with respect to the movable bracket 110. This mounting arrangement, by which the left ends of the X bracket 100 are pivotally mounted between the brackets 92 and 110, and the right ends are pivotally and slidably mounted to the brackets 92 and 110, permits the collapsing of the X bracket 100 within the rectangular space defining the recess or slot 15 of the visor core when the mirror assembly 20 is retracted within the body of the visor, and the extension of the panel, as illustrated in the fragmentary view of Figure 10, in which ends 108 and 111 of the X bracket slide to the left within the slots 96 and 114. Naturally, in the contracted position, these ends slide to the right in the slots as the X-shaped bracket collapses. The centre of the legs 102 and 104 is off-set at 106, as illustrated in Figures 9 and 10, to provide clearance in their collapsed position.

The ends of the bracket 110 include integrally moulded, generally L-shaped slide caps 118 and 120 through which the conductive pivot rods 122 and 124 extend, respectively. The pivot rods 122 and 124 also extend through moulded-on torque hinges 126 and 128 each including a pair of spaced apertures 129 for securing the hinges so formed to rear closure panel 41 of the visor assembly, as shown in Figures 9 and 10. The hinges so formed can be secured to the panel 41 by suitable fastening screws 127 which extend through apertures formed in the rear closure panel 41 or by other conventional fastening means. The moulded-on hinges 126 and 128 can be made of the same material to achieve the same results as the moulded-on torque devices described in US-A-4,352,518. The purpose of the torque fitting hinges 126 and 128 is to permit the illuminated mirror assembly 20 to be adjusted to any desired position, as illustrated in Figures 4 and 5 and maintain such adjusted position until manually moved to a desired different position. To anchor the pivot pins 122 and 124 against rotation, the pins can be knurled or include flanges which are fitted into the end caps 118 and 120 to anchor the pins against rotation with respect to the bracket 110 and permit the rotational interface to take place within the body of the hinges 126 and 128 secured to the mirror assembly 20 by the rear closure panel 41. The pins 122 and 124 extend inwardly facing each other to the inside edges of the hinges 126 and 128 a distance sufficient to engage the slip-ring contacts 54 and 49 of the conductors 46 and 44, respectively, as illustrated in Figure 10, and extend outwardly from the sides of the front panel 30 of the mirror assembly 20, as best seen in Figure 6, to provide electrical contact with side bracket assemblies 130 and 140 now described.

Each of the bracket assemblies 130 and 140 are substantially identical such that a description of only one is provided in detail with the same elements carrying the same last (i.e., differing by 10) reference digit. The bracket assembly 130, for example, is a generally elongated U-shaped member having upper and lower legs 132 and 134 defining a slot therebetween and a rear wall 133 from which there extends a blade 135 for securing the side bracket assemblies within the core 17 of the visor. The lower end of the bracket includes a tapered, blunt nose 136 to conform the bracket to the lower configured edge of the visor. The upper leg 132 includes a slot 137 formed therein to facilitate assembly of the illuminated mirror panel assembly 20 therein by permitting the pivot rods 122 and 124 to be extended into the slots 137 and 147 during assembly. The spacing of the legs 132 and 134 and 142 and 144 permit the mounting of an electrical conductor strip 150 therein which is secured within the brackets 130 and 140 by means of a pair of apertures 152 and suitable fastening means such as screws. The lower end of each of the conductors 150 is bent to extend inwardly toward the centre of the visor and provide an electrical contact 154 which will engage the end of the respective electrically conductive pivot rods 122 and 124 once the slide assembly is moved from the upward, stored position to a lowered, use position. Thus, the upper portion of each conductor 150 provides clearance such that the ends of the rods will not contact these electrical contacts while lower contact portion 154 will contact the pivot rods once the slide has been lowered to thereby supply electrical operating power through the rods 122 and 124 through the electrical conductors 46 and 44, respectively, and subsequently to the light bulbs 50 mounted therein automatically when the illuminated mirror assembly is extended from the visor body. The upper ends of the conductors 150 include a lug 156 for receiving a conventional snap-on terminal 157 coupled to an electrical wire 158 for each of the contacts, which wires extend through the upper portion of the visor core through the elbow bracket assembly 14 to the vehicle's operating power system.

The mirror assembly 20 and the slide assembly 90 are positioned within the moulded polypropylene core 17, which is shown schematically in phantom form in Figure 10, and which comprises a pair of core halves joined along a living hinge 19. The core is fabricated in a manner similar to that described in US-A-4,000,404, with the exception that the slot 15 is shaped to accommodate the slide assembly 90 including the side bracket assemblies 130 and 140.

Once the illuminated mirror assembly 20 has been assembled, it is positioned within the side slide brackets 130 and 140 with the end caps 118 and 120 sliding between and guided by the legs or walls 132 and 134 of the bracket 130 and the legs are walls 142 and 144 of the bracket 140 to provide smooth sliding and support for the movement of the illuminated panel assembly into and out of the visor body. The core halves 17 are then closed and the core is sealed by heat staking, bonding or other conventional means to hold the assembly in position with the upholstery fabric covering the core and the noses 136 and 146 of the end bracket assemblies, as well as the handle means 40 of the illuminated mirror assembly. The light bulbs may conveniently be approximately 0.7 of a candle power (candela-cd) to provide a total of 3.5 candle powers (cd) of illumination through the generally U-shaped light transmitting translucent panel 24. In other embodiments of the invention, larger or smaller bulbs may be employed and the surfaces of the conductors 44 and 46 may be plated to be highly reflective to assist in the projection of illumination from lamps outwardly through the translucent panel 24. Naturally, the conductors 44 and 46 are shaped to position and align the bulbs directly behind the U-shaped panel 24 with the bulbs being generally vertically positioned at the centre of the side legs and the three bulbs along the lower leg being positioned at the centre and midway between each of the sides of the lower leg of the panel 24. A greater or fewer number of sockets can be formed in the conductors 44 and 46 to increase or decrease the illumination, and a bright/dim switch may be provided in connection with a conventional electrical circuit to increase or decrease the amount of current supplied to the bulbs for increasing or decreasing, respectively, the amount of illumination provided by such bulbs.

Figure 14 shows an alternative embodiment of the electrical conductors, which can be used with the system of the present invention, Figure 14 shows a system by which bright and dim levels of illumination can be provided by activating a greater or fewer number of light bulbs. In Figure 14, three electrical conductors 200, 210 and 220 are provided with the conductor 200 being a stamped metal conductive material and generally U-shaped. The conductor 200 includes a pair of leaf contacts 202 at one end which cooperate with the rod 122 (Figure 9) for providing the common electrical conductor for the lamp circuit. The electrical conductor 200 also includes on its left leg a pair of vertically spaced upstanding terminals 204 which cooperate with mating terminals on the conductors 210 or 220 for physically holding wedge-type bulbs, which are commercially available No. 74 bulbs, in place behind the U-shaped panel 24 (Figure 9).

The bottom leg of the conductor 200 includes three equally spaced contacts 206 while the right leg includes a pair of spaced contacts 208. Each of these legs are upwardly turned and, as seen in Figure 19, include an indentation 207 for receiving the wire conductor 232 of bulb 230 in physical and electrical contact.

The conductive strip 220 also includes a leaf contact 222 which engages supply voltage rod 124 (Figure 9) for supplying operating current to the electricity conductive strip 220. The strip 220 also includes a pair of upwardly turned ends 224 along an upper leg which are aligned with and form the opposite contact for the wedge base bulb 230 in cooperation with upper contacts 204 and 208 of the contact strip 200. The contacts 224 and the remaining contacts include a recess 227 therein for receiving the remaining electrical wire 234 of bulb 230 for supplying operating power thereto. The conductor 220 also includes a pair of generally vertically extending legs, as seen in Figure 14, which define contacts 226 for a pair of spaced bulbs along the lower leg of the generally U-shaped light provided by the system.

A high intensity illumination conductor 210 is positioned intermediate the low light level conductor 220 and the camming conductor 200 and similarly includes a pair of contacts 214 and 218 on opposite ends thereof which cooperate and are aligned with the contacts 204 and 208 of the common conductor 200 to provide a physical socket for the wedge-based bulbs. The contact strip 210 also includes a centre leg with a contact 216 cooperating with the centre contact 206 of the strip 200 for providing a bulb receiving socket in cooperation therewith.

Each of the conductors 200, 210, and 220 include a plurality of apertures 240 spaced at various locations therealong for securing them to the insulative rear closure or backing panel 41 of the mirror assembly by, for example, heat staking the conductors in the relative position, shown in Figure 14. A slide switch (not shown) couples the conductor 220 to the conductor 210 when in the high intensity position. Voltage applied to the contact 222 will be applied to the conductor 220 in the low position for illuminating four light bulbs 230, one on each of the legs and two on lower leg of the U-shaped light source; when the switch is closed to apply power from the contact 222 to both the conductors 220 and 210, three additional light bulbs with one on either side and one centrally located on the bottom are activated such that in the high intensity position, seven lamps are illuminated. With the system illustrated in Figures 14 and 15, therefore, upper and lower levels of illumination are provided by selectively activating a greater or fewer number of lamps, and the wedge-shaped bulbs which have a candle power of approximately 0.7 cd for each bulb will provide a total illumination of 4.9 candle power in the high intensity position and 3.5 candle power in the lower level of illumination.

The mirror and light package contained within the assembly 20 can also be placed in a variety of other shaped visor bodies or panels positioned within the interior of a vehicle to provide the desired U-shaped light source surrounding a mirror to provide illumination for the use of a mirror or for other light source applications.

**Claims**

1. A visor (10) comprising: a visor body (12) having slot means (15) formed along a lower edge thereof and extending within the visor body for receiving a slideout panel (20); means (90) for slidably mounting the panel to the visor body for movement between a stored position within the visor body and a use position extended from the visor body; means for pivotally mounting the panel to the mounting means to permit the panel to be adjustably pivoted on an axis parallel to a longitudinal axis of the visor body when in the use position; characterised in that the said axis is adjacent an upper edge of the panel (20), with the mounting means (90) being located within the visor body (12).

2. A visor as claimed in Claim 1 including latch means for releasably holding the panel (20) in the stored position.

3. A visor as claimed in Claim 1 or Claim 2 in which the means (90) for slidably mounting the panel includes a pair of spaced guide means (130, 140) positioned in the visor body (12) and extending along opposite sides of the panel (20).

4. A visor as claimed in Claim 3 in which the means (90) for slidably mounting the panel further includes a movable slide (110, 135, 145) including ends guidably supported by the guide means.

5. A visor as claimed in Claim 4 in which the means for pivotally mounting the panel includes hinge means (126, 128) extending between the movable slide and the panel).

6. A visor as claimed in any one of the preceding claims in which the means for slidably mounting the panel (20) further includes an X-shaped bracket (100) comprising two legs (102, 104) pivotally coupled to each other where the legs cross and in which one end (111, 113) of each leg is pivotally coupled to one of the visor body or movable slide and the other end of each leg (101, 108) is pivotally and slidably coupled to the other of the visor body (12) or movable slide such that the panel is stabilized in its movement between a stored position within the visor body and a use position extended from the visor body.

7. A visor as claimed in any one of the preceding claims in which the panel includes a vanity mirror (22) and means for illuminating the vanity mirror.

8. A visor as claimed in Claim 7 in which the means for illuminating the mirror (22) comprises elongate lighting means (24) adjacent the mirror and extending along only the side and bottom edges of the mirror for providing illumination of the area in front of the mirror.

9. A visor as claimed in any one of the preceding claims in which the means for mounting the panel (20) to the visor body (12) includes means for pivoting the panel when in an extended position, so permitting use of the panel when the visor body is in a variety of positions.

10. A visor as claimed in any one of the preceding claims when dependent upon Claim 3 in which the means for pivotally mounting the panel (20) to the mounting means comprises hinge means having conductive pins extending into electrical contact with the illuminating means, and means for coupling the conductive pins to the vehicle's electrical source of operating power to apply operating power to the illuminating means.

11. A visor as claimed in Claim 10 which is arranged so that the light illuminating means are turned on when the panel is moved to the use position.

**Patentansprüche**

1. Sonnenblende (10) mit: einem Sonnenblendenkörper (12) mit einem Schlitz (15), der entlang einer unteren Kante von diesem eingeformt ist und innerhalb des Sonnenblendenkörpers verläuft zur Aufnahme eines herausschiebbaren Panels (20); einer Einrichtung (90) zur verschiebbaren Befestigung des Panels an dem Sonnenblendenkörper zur Verschiebung zwischen einer Ruhestellung in dem Sonnenblendenkörper und einer Benutzungsstellung, ausgefahren aus dem Sonnenblendenkörper; einer Einrichtung zur schwenkbaren Befestigung des Panels an der Befestigungseinrichtung, damit das Panel in der Benutzungsstellung auf einer Achse parallel zu einer Längsachse des Sonnenblendenkörpers einstellbar schwenkbar ist; dadurch gekennzeichnet, daß sich die Achse in der Nähe einer oberen Kante des Panels (20) befindet, wobei die Befestigungseinrichtung (90) innerhalb des Sonnenblendenkörpers (12) angeordnet ist.

2. Sonnenblende nach Anspruch 1, mit einer Verriegelungseinrichtung zum lösbaren Halten des Panels (20) in der Ruhestellung.

3. Sonnenblende nach Anspruch 1 oder 2, wobei die Einrichtung (90) zur verschiebbaren Befestigung des Panels ein Paar von beabstandeten Führungseinrichtungen (130, 140) enthält, die in dem Sonnenblendenkörper (12) angeordnet sind und sich entlang gegenüberliegenden Seiten des Panels (20) erstrecken.

4. Sonnenblende nach Anspruch 3, wobei die Einrichtung (90) zur verschiebbaren Befestigung des Panels weiter ein Paar von beweglichen Gleitstücken (110, 135, 145) enthält mit von den Führungseinrichtungen führbar abgestützten Enden.

5. Sonnenblende nach Anspruch 4, wobei die Einrichtung zur schwenkbaren Befestigung des Panels eine Scharniereinrichtung (126, 128) enthält, die sich zwischen dem beweglichen Schlitten und dem Panel erstreckt.

6. Sonnenblende nach einem der vorhergehenden Ansprüche, wobei die Einrichtung zur verschiebbaren Befestigung des Panels (20) weiter einen X-förmigen Bügel (100) enthält mit zwei Schenkeln (102, 104), die an deren Überkreuzung schwenkbar gekoppelt sind, und wobei ein Ende (111, 113) eines jeden Schenkels schwenkbar gekoppelt ist mit entweder dem Sonnenblendenkörper oder dem beweglichen Schlitten und das andere Ende eines jeden Schenkels (101, 108) schwenkbar und verschieblich gekoppelt ist mit dem anderen Teil, dem beweglichen Schlitten oder dem Sonnenblendenkörper (12), so daß das Panel bei seiner Bewegung zwischen einer Ruhestellung in dem Sonnenblendenkörper und einer Benutzungsstellung, aus dem Sonnenblendenkörper ausgefahren, stabilisiert ist.

7. Sonnenblende nach einem der vorhergehenden Ansprüche, wobei das Panel einen Schminkspiegel (22) und eine Einrichtung zur Beleuchtung des Schminkspiegels enthält.

8. Sonnenblende nach Anspruch 7, wobei die Einrichtung zur Beleuchtung des Spiegels (22) eine längliche Beleuchtungseinrichtung (24) enthält, die sich neben dem Spiegel und nur längs der seitlichen und unteren Kanten des Spiegels erstreckt, um eine Beleuchtung des Feldes vor dem Spiegel zu bewirken.

9. Sonnenblende nach einem der vorhergehenden Ansprüche, wobei die Einrichtung zur Befestigung des Panels (20) an dem Sonnenblendenkörper (12) eine Einrichtung zum Schwenken des Panels, wenn es sich in einer ausgefahrenen Stellung befindet, enthält, so daß in verschiedenen Stellungen des Sonnenblendenkörpers eine Benutzung des Panels möglich ist.

10. Sonnenblende nach einem der vorhergehenden Ansprüche, wenn dieser auf Anspruch 3 zurückbezogen ist, wobei die Einrichtung zur schwenkbaren Befestigung des Panels (20) an der Befestigungseinrichtung eine Scharniereinrichtung enthält, die sich in einen elektrischen Kontakt mit der Beleuchtungseinrichtung erstreckende leitfähige Stifte aufweist, und eine Einrichtung zum Koppeln der leitfähigen Stifte mit einer elektrischen Versorgungseinrichtung eines Fahrzeugs zur Zuführung von Strom zu der Beleuchtungseinrichtung.

11. Sonnenblende nach Anspruch 10, wobei dieses so eingerichtet ist, daß die Beleuchtungseinrichtung bei Bewegung des Panels in die Benutzungsstellung eingeschaltet wird.

## Revendications

1. Unpare-soleil (10) comprenant: un corps de pare-soleil (12) ayant des moyens de réception (15) aménagés le long de son bord inférieur et disposés à l'intérieur du pare-soleil pour recevoir un panneau (20) pouvant coulisser vers l'extérieur; des moyens (90) pour monter coulissant le panneau sur le corps du pare-soleil permettant un déplacement entre une position intégrée dans le corps du pare-soleil et une position d'utilisation en extension depuis le corps du pare-soleil; des moyens pour monter pivotant le panneau relativement aux moyens demontage pour permettre un réglage pivotant du panneau autour d'un axe parallèle à l'axe lorgitudinal du corps du pare-soleil en position d'utilisation; caractérisé en ce que ledit axe est adjacent à un bord supérieur du panneau (20), les moyens de montage (90) étant disposés à l'intérieur du corps du pare-soleil (12).

2. Un pare-soleil selon la revendication 1, comprenant des moyens de verrouillage pour maintenir, de façon libérable, le panneau (20) dans la position intégrée.

3. Un pare-soleil selon la revendication 1 ou 2, dans lequel les moyens (90) pour monter coulissant le panneau comprennent une paire de moyens de guidage écartés (130, 140) positionnés dans le corps du pare-soleil (12) et s'étendant le long des côtés opposés du panneau (20).

4. Un pare-soleil selon la revendication 3, dans lequel les moyens (90) pour monter coulissant le panneau comportent en outre une glissière mobile (110, 135, 140) comprenant des extrémités supportées en guidage par les moyens de guidage.

5. Un pare-soleil selon la revendication 4, dans lequel les moyens pour monter pivotant le panneau comportent des moyens d'articulation (126, 128) situés entre la glissière mobile et le panneau.

6. Un pare-soleil selon l'une quelconque des revendications précédentes, dans lequel les moyens pour monter coulissant le panneau (20) comportent en outre un support (100) en forme de X, comprenant deux branches (102, 104) articulées couplées l'une à l'autre à leur point d'intersection, et dont une extrémité (111, 113) de chaque bras est articulée sur le corps du pare-soleil ou la glissière mobile, et dont l'autre extrémité (101, 108) est respectivement articulée avec possibilité de coulissement sur la glissière mobile ou le corps du pare-soleil (12), de sorte que le panneau est stabilisé dans sondé placement entre une position intégrée dans le corps du pare-soleil et une position d'extension à partir du corps du pare-soleil.

7. Un pare-soleil selon l'une quelconque des revendications précédentes, dans lequel le panneau comporte un miroir de toilette (22) et des moyens pour éclairer ledit miroir de toilette.

8. Un pare-soleil selon la revendication 7, dans lequel les moyens pour éclairer le miroir (22) comportent des moyent d'éclairage allongés (24) adjacents au miroir et s'étendant seulement le long des bords latéraux et inférieur du miroir pour éclairer la surface située devant le miroir.

9. Un pare-soleil selon l'une quelconque des revendications précédentes, dans lequel les moyens pour monter le panneau (20) sur le corps du pare-soleil (12) comportent des moyens pour faire pivoter le panneau lorsqu'il se trouve en position déployée permettant ainsi l'utilisation du panneau lorsque le corps du panneau se trouve un certain nombre de positions.

10. Un pare-soleil selon l'une quelconque des revendications précédentes lorsqu'elles dépendent de la revendication 3, dans lequel les moyens pour monter pivotant le panneau (20) relativement aux moyens de montage comportent des moyens d'articulation à fiches conductrices reliées aux contacts électriques faisant partie des moyens d'éclairage, et des moyens pour connecter les fiches conductrices à la source d'alimentation électrique du véhicule fournissant l'énergie pour alimenter les moyens d'éclairage.

11. Un pare-soleil selon la revendication 10, agencé de manière à ce que les moyens d'éclairage soient allumés, lorsque le panneau est déplacé vers la position d'utilisation.

FIG 1

FIG 2

1

FIG 3

FIG 4

FIG 5

FIG 6

FIG 7

FIG 8

FIG 11

FIG 12

FIG 13

FIG 9

FIG 10

FIG 14

FIG 15

FIG 9A